# EUROPEAN PATENT SPECIFICATION

(11) **EP 2 163 421 B1**
(45) Date of publication and mention of the grant of the patent: **13.12.2017**
(21) Application number: 09170002.1
(22) Date of filing: 11.09.2009
(51) Int. Cl.: H02K 7/116, B60N 2/02, B60N 2/16, B60N 2/18, F16H 1/16

(54) **Power seat driving apparatus for vehicle**
Elektrische Sitzantriebsvorrichtung für ein Fahrzeug
Appareil de commande de siège électrique pour véhicule

(30) Priority: 11.09.2008 JP 2008232828
(43) Date of publication of application: 17.03.2010
(73) Proprietor: AISIN SEIKI KABUSHIKI KAISHA, Kariya-shi, Aichi-ken 448-8650 (JP)
(72) Inventor: Koga, Yoshitaka, 1, Asahi-machi 2-chome Kariya-shi, Aichi-ken 448-8650 (JP); Suzumura, Hirokazu, 1, Asahi-machi 2-chome Kariya-shi, Aichi-ken 448-8650 (JP); Tsuji, Eiichiro, 1, Asahi-machi 2-chome Kariya-shi, Aichi-ken 448-8650 (JP)
(74) Representative: Intès, Didier Gérard André

(56) References cited:
- WO-A2-2005/097540
- DE-U1- 29 911 221
- JP-A- H0 911 785
- JP-A- H06 343 246

## Description

### FIELD OF THE INVENTION

The present invention relates to a power seat driving apparatus for a vehicle having a decelerating mechanism for decelerating a driving force of a power supply and transmitting the decelerated driving force to a moving unit of a seat.

### BACKGROUND

A seat apparatus for a vehicle is known, in which a motor, serving as a power supply, and a decelerating mechanism for decelerating a driving force of the motor and transmitting the decelerated driving force to a moving unit of a seat, are combined and operated in order to adjust an inclination of a front portion of a seat cushion of a seat for a vehicle in an upper-lower direction of the seat and in order to slidably adjust an entire seat in a front-rear direction of the vehicle, for example. The decelerating mechanism includes gear deceleration portions, which engage with each other at a predetermined deceleration ratio. A large torque may be obtained according to the deceleration ratio. In a seat apparatus for adjusting an inclination of a seat, a plurality of deceleration portions is combined because a large torque may be required in order to raise the seat. In such configured power seat driving apparatus for vehicle, it is important to reduce a backlash at an inside of the decelerating mechanism in order to improve stability of an operation of the decelerating mechanism. Further, when the backlash is reduced, it is expected to reduce gear noise in order to improve comfortableness.

A rotation transmission mechanism disclosed in JP2005-344757A includes a decelerating mechanism that is adaptable to a power seat driving apparatus for vehicle. The rotation transmission mechanism according to JP2005-344757A includes a planetary gear mechanism having a first central gear, a second central gear, a first planetary gear and a second planetary gear. Not only the planetary gear mechanism, according to JP2005-344757A, but also a general planetary gear mechanism may be configured with a relatively small backlash.

When the decelerating mechanism is configured with a general gear set without using the planetary gear mechanism, a dimensional clearance is generally provided at the inside of the decelerating mechanism because a tolerance at the time of production and operational restriction are considered. On the other hand, when a rotational speed is reduced, a gear may idly rotate for an amount corresponding to a backlash because of inertia, and tooth surfaces of gears may clash with each other, thereby causing generation of stress. Furthermore, when the rotation stops, clashing damage may be generated. Therefore, sufficient mechanical strength is necessary to be secured for the stress and the damage as well as normally transmitted torque. As a result, supporting portions of a case for rotatably supporting the gears are generally made of metal. Extensive stress and damage may occur specifically in a mechanism in which a deceleration rate is large. Therefore, the supporting portion may be required to be made of iron, and the like,

According to the planetary gear mechanism disclosed in JP2005-344757A, although the backlash may be reduced, other drawbacks may exist, such that the number of components is increased, a size of the mechanism is enlarged, and a cost is increased. On the other hand, when a general gear set is used for deceleration, it may be difficult to reduce the backlash and to improve the stability because torque outputted from the gear set becomes large. Further, the supporting portion may be required to be made of metal. Therefore, weight may not be reduced.

A need thus exists for a power seat driving apparatus for a vehicle, in which a backlash is reduced in order to improve operational stability. Further, the number of components as well as a size and a weight are reduced while a cost is also reduced.

### SUMMARY OF THE INVENTION

According to an aspect of the present invention, a power seat driving apparatus for a vehicle includes a moving unit adapted to be arranged between a seat and a vehicle floor so as to move the seat relative to the vehicle floor and a decelerating mechanism connected to the moving unit so as to decelerate a driving force outputted by a power supply and transmit the decelerated driving force to the moving unit. The decelerating mechanism includes a driving gear, a driven gear engaging with the driving gear and driven to rotate while decelerating a rotational speed of the driving gear, a supplemental gear coaxially connected to the driven gear in an interlocking manner, made of a resin material having elasticity and lower rigidity than the driven gear, having a larger tooth thickness than a tooth thickness of the driven gear by an amount corresponding to a backlash, and engaging the driving gear together with the driven gear; and a housing accommodating and rotatably supporting the driving gear, the driven gear and the supplemental gear.

Accordingly, the driven gear and the supplemental gear are connected to each other and each of the driven gear and the supplemental gear engages with the driving gear to be driven to rotate in an interlocking manner. In the second deceleration portion, the tooth thickness of the supplemental gear is larger than that of the driven gear by the amount corresponding to the backlash. Therefore, the driven gear and the driving gear engage with each other so as to include the backlash therebetween while the supplemental gear and the driving gear engage with each other so as not to include a backlash therebetween. Accordingly, when the rotational speed of the driving gear is reduced, the idling rotation of the supplemental gear for the amount corresponding to the backlash is less likely to occur. Even though the supplemental gear may idly rotate, a degree of the idling rotation may be extremely small. In other words, even when inertia leads the driven gear to rotate idly for the amount corresponding to the backlash, the idling rotation of the driven gear corresponding to the backlash does not actually occur because the supplemental gear, which is interlocked with the driven gear restricts the idling rotation of the driven gear. Accordingly, stress and damage applied to the gears and housing are reduced. Further, the supplemental gear is made of a resin material, which includes elasticity and a low rigidity. Therefore, the supplemental gear includes a large resistance relative to an instantaneous large deformation so that the idling rotation of the driven gear is restricted. On the other hand, the supplemental gear is elastically deformed relative to a normal transmission of rotation from the driving gear to the driven gear so that the driven gear is driven to rotate smoothly. As a result, operational stability of the decelerating mechanism is improved. Further, gear noise, which may occur in accordance with the backlash, is reduced

According to another aspect of the invention, the driven gear and the supplemental gear are a spur gear having the same number of teeth and the same phase.

Accordingly, configuration for engaging both of the driven gear and the supplemental gear with the driving gear may be achieved by a small number of components. As a result, a cost is reduced.

According to a further aspect of the invention, a protruding portion slidably contacting an inner wall surface of the housing is formed on a surface of the supplemental gear opposite from a surface thereof facing the driven gear.

Accordingly, the backlash between the driven gear and the inner wall surface of the housing in the axial direction of the driven gear is reduced. Therefore, displacement of each of the driven gear and the supplemental gear relative to the housing not only in a rotational direction but also in the axial direction of the gears is restricted. Accordingly, stability of operation of the decelerating portion is improved.

According to a further aspect of the invention, the driven gear integrally or separately includes a shaft portion extending in an axial direction of the driven gear and rotatably supported by a recess formed at an inner circumferential surface of the housing, at an outer circumferential surface thereof. The supplemental gear includes a supplemental shaft portion arranged between the shaft portion of the driven gear and a supplemental bearing hole formed at the housing coaxially with the bearing hole, the supplemental shaft portion fitted with the shaft portion while slidably contacting the supplemental bearing hole.

Accordingly, the backlash among the driven gear, the supplemental gear and the housing in the radial direction of the gears is reduced. Therefore, displacement of each of the driven gear and the supplemental gear relative to the housing is restricted not only in the rotational direction but also in the radial direction. Accordingly, stability of operation of the decelerating portion is improved.

### BRIEF DESCRIPTION OF THE DRAWINGS

The foregoing and additional features and characteristics of the present invention will become more apparent from the following detailed description considered with the reference to the accompanying drawings, wherein:
Fig. 1 is a side view illustrating an entire structure of a power seat driving apparatus for a vehicle according to a first embodiment;
Fig. 2 is a perspective view illustrating first and second deceleration portions applied to the first embodiment shown in Fig. 1;
Fig. 3 is a cross-sectional view illustrating the first and second deceleration portions applied to the first embodiment shown in Fig. 1;
Fig. 4 is an exploded perspective view illustrating the first and second deceleration portions applied to the first embodiment shown in Fig. 1;
Fig. 5 is a cross-sectional view illustrating first and second deceleration portions according to a second embodiment, in which a backlash in an axial direction and in a radial direction is reduced;
Fig. 6 is a cross-sectional view illustrating an elastic gear applied to the second embodiment shown in Fig. 5;
Fig. 7 is a cross-sectional view illustrating first and second deceleration portions according to a third embodiment, in which a rotational range of an output gear is restricted; and
Fig. 8 is an exploded perspective view illustrating the first and second deceleration portions applied to the third embodiment shown in Fig. 7.

### DETAILED DESCRIPTION

### [First embodiment]

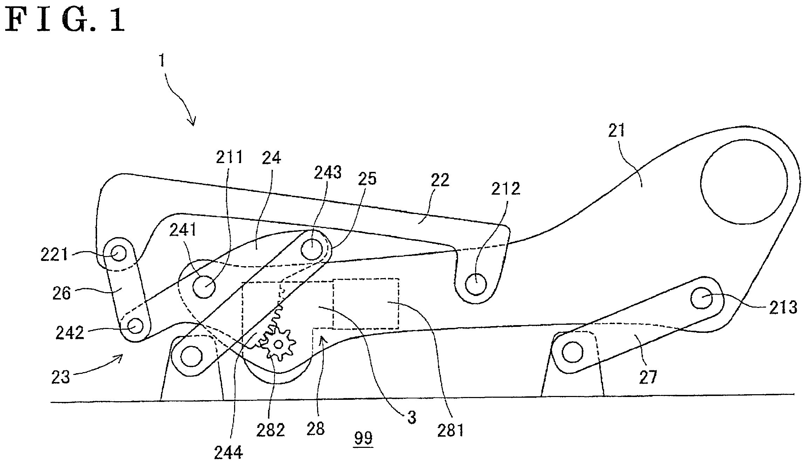

A first embodiment of a power seat driving apparatus 1 for a vehicle will be provided hereinafter with reference Figs. 1 to 4. The power seat driving apparatus 1 includes left and right side brackets 21 holding a seat cushion at left and right side surfaces of the seat cushion, a cushion frame 22 holding the seat cushion at a bottom side of the seat cushion, left and right front pivot-link mechanisms 23 rotating in order to operate front portions of the side brackets 21 and the cushion frame 22 so as to pivot, left and right rear pivot links 27 rotating in order to operate rear portions of the side frames 21 so as to pivot, a front driving device 28 and a rear driving device. The power seat driving apparatus 1 includes substantially the same structures and functions at left and right sides thereof. Therefore, only one side of the power seat driving apparatus 1 will be described hereinafter, unless otherwise indicated.

A rear portion of the cushion frame 22 is supported by the side bracket 21 by means of a first support pin 212 arranged at an intermediate portion of the side bracket 21. The front pivot-link mechanism 23 includes a pivot link 24, a front link 25 and a frame pivot link 26. A support hole 241 is formed at an intermediate portion of the pivot link 24, and the pivot link 24 is supported by the side bracket 21 by means of a second support pin 211 arranged at a front end of the side bracket 21. A rear end of the pivot link 24 is pivotably connected to an upper rail 99 by the front link 25 pivotably connected to the pivot link 24 at a first joint portion 243. A second joint portion 242 provided at a front end of the pivot link 24 is pivotably connected to a front portion of the cushion frame 22 by the frame pivot link 26 by means of a third support pin 221. Further, a sector gear 244 is integrally formed at one of the left and right pivot links 24. The sector gear 244 is formed into a substantially sectorial shape expanding toward a rear direction centering the support hole 241, and teeth are formed at a rear end of the sector gear 244 along an arc surface of the sectorial shape. The left and right pivot links 24 are connected to each other by means of a transmission rod, which is coaxially provided with the second support pin 211, so as to pivot integrally. A rear portion of the rear pivot link 27 is supported by the side bracket 21 by means of a fourth support pin 213, arranged at a lower-rear end of the side bracket 21. A front portion of the rear pivot link 27 is pivotably supported at the upper rail 99. A moving unit of a seat being capable of moving the seat relative to a vehicle floor, is configured by the side bracket 21 and the cushion frame 22.

The front driving device 28 includes a motor (a power supply) 281, outputting a driving force, and a decelerating portion 3, having an output gear 282 engaging with the sector gear 244. When the output gear 282 is driven to rotate in a counter-clockwise direction in Fig. 1, the pivot link 24 pivots in a clockwise direction in Fig. 1 because the sector gear 244 engages with the output gear 282. Because of an operation of the front pivot-link mechanism 23, the front portions of the side bracket 21 and the cushion frame 22 move upwardly. On the other hand, when the output gear 282 is driven to rotate in the clockwise direction in Fig. 1, the pivot link 24 pivots in the counter-clockwise direction in Fig. 1 because the sector gear 244 engages with the output gear 282, and the front portions of the side bracket 21 and the cushion frame 22 move downwardly. A structure and a function of the rear driving device are similar to that of the front driving device 28. The rear driving device is configured by a motor and a decelerating mechanism. When the rear driving device drives the rear pivot link 27 to pivot in the clockwise direction in Fig. 1, the rear portion of the side bracket 21 moves downwardly.

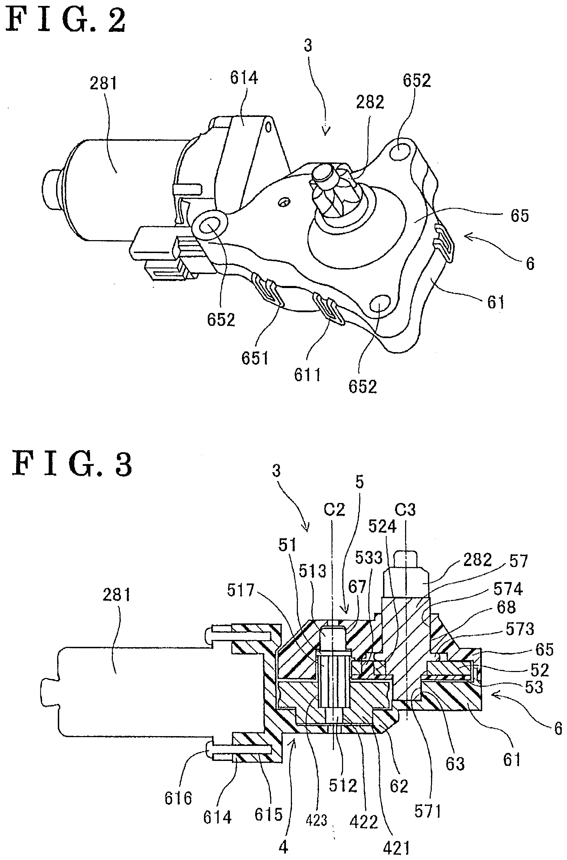

In the front and rear driving devices, only the decelerating portion 3 applied to the front driving device 28 will be described hereinafter as an example, with reference Figs. 2 to 4. The decelerating portion 3 is a mechanism for decelerating the driving force of the motor 281 and transmitting the decelerated driving force to the output gear 282. The decelerating portion 3 includes a first deceleration portion 4, a second deceleration portion 5, (a deceleration mechanism), and a housing 6.

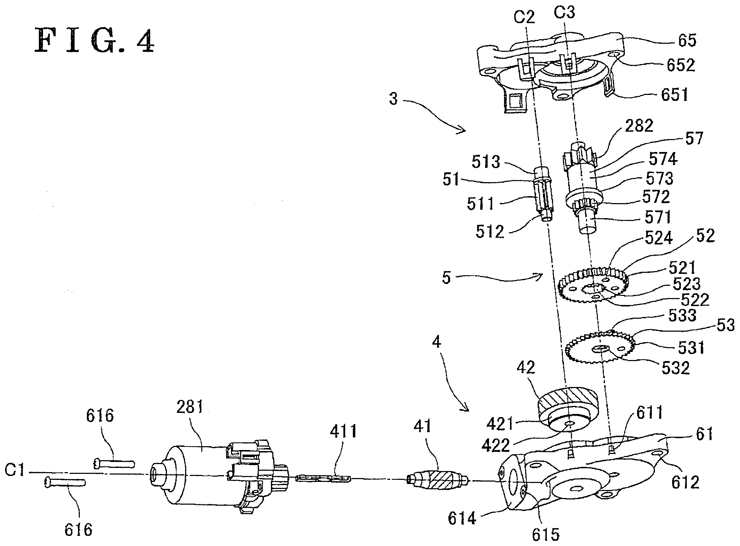

The housing 6 includes a housing main body 61 and a housing cover 65, each of which is made of resin. The housing main body 61 and the housing cover 65 face each other to accommodate the first and second deceleration portions 4 and 5 at an inside portion of the housing 6 surrounded by the housing main body 61 and the housing cover 65. Protruding portions 611 are provided at four portions of a rim of the housing main body 61. Hook portions 651 are provided at the housing cover 65 so as to face the corresponding protruding portions 611. The protruding portions 611 engage with the corresponding hook portions 651, and thereby the housing main body 61 and the housing cover 65 are connected to each other to configure the housing 6. First attachment holes 612 are formed at three portions of the rim of the housing main body 61. Second attachment holes 652 are formed at three portions of a rim of the housing cover 65, corresponding to the first attachment hole 612. The housing main body 61 and the housing cover 65 are integrally attached to the side bracket 21 shown in Fig. 1 at the first and second attachment holes 612 and 652 by means of fastening members. Further, as illustrated in Figs. 3 and 4, a flange 614 for attaching the motor 281 thereto is formed at a left side of the housing main body 61 in Figs 3 and 4. Two screw holes 615 are formed at opposing corners of the flange 614. The motor 281, contacting the flange 614, is fixed to the flange 614 by means of two screws 616 screwed into the screw holes 615.

A driving-portion bearing hole is formed at a back-left portion of an inside of the housing main body 61 in Fig. 4. The driving-portion bearing hole axially rotatably supports a driving portion of the first deceleration portion 4 around a first axis C1 extending substantially horizontally in Fig. 4. A first main-body bearing hole 62 is formed at a front-left portion of the inside of the housing main body 61 in Fig. 3. The first main-body bearing hole 62 axially rotatably supports a driven portion of the first deceleration portion 4 around a second axis C2, extending substantially vertically in Figs. 3 and 4. A second main-body bearing hole 63 (a recess) is formed at a right portion of the inside of the housing main body 61 in Fig. 3. The second main-body bearing hole 63 axially rotatably supports a driven portion of the second deceleration portion 5 about a third axis C3, extending substantially vertically in Figs. 3 and 4. Further, a first cover bearing hole 67 is formed at a left portion of an inside of the housing cover 65 in Fig. 3. The first cover bearing hole 67 axially rotatably supports a driven portion of the first deceleration portion 4 around the second axis C2. A second cover bearing hole 68 is formed at a right portion of the inside of the housing cover 65 in Fig. 3. The second cover bearing hole 68 axially rotatably supports a driven portion of the second deceleration portion 5 around the third axis C3.

The first deceleration portion 4 includes a worm 41, which is a driving portion of the first deceleration portion 4, and a helical gear 42, which is a driven portion of the first deceleration portion 4. The worm 41 and the helical gear 42 engage with each other. The first deceleration portion 4 decelerates the driving force and changes a rotational axis of the driving force substantially 90 degrees from the first axis C1, which extends substantially horizontally, to the second axis C2, which extends substantially vertically. The worm 41 is axially rotatably supported by the driving-portion bearing hole formed at the housing main body 61. The worm 41 is connected to an output shaft of the motor 281 so as to integrally rotate therewith, using a joint member, whose ends in a longitudinal direction thereof are formed into a quadrangular shape when seen in a cross-sectional view. The helical gear 42, which engages with the worm 41, includes a shaft portion 421, which protrudes downwardly in Figs. 3 and 4. An outer circumferential surface of the shaft portion 421 is axially rotatably supported by the first main-body bearing hole 62 of the housing main body 61. A shaft hole 422, which is formed into a stepped shape, is formed at an axial center of the helical gear 42. A first inner teeth portion 423 is formed at an inner circumferential surface of an upper and large-radius portion of the first shaft hole 422 in Figs. 3 and 4.

The second deceleration portion 5 includes a pinion gear 51 (a driving gear), a spur gear 52 (a driven gear) and an elastic gear 53 (a supplemental gear). The second deceleration portion 5 further decelerates the driving force, which has been decelerated by the first deceleration portion 4. The pinion gear 51, which is a driving portion of a second deceleration portion 5, includes a first gear portion 511, a first lower shaft portion 512 and a first upper shaft portion 513. The first gear portion 511 includes a spur gear formed along an outer circumferential surface of a cylindrical portion of the pinion gear 51. The first lower and upper shaft portions 512 and 513 are coaxially formed at lower and upper ends of the first gear portion 511, respectively, so that a radius of each of the first lower and upper portions 512 and 513 is smaller than that of the first gear portion 511. The first lower shaft portion 512 engages with the first shaft hole 422 of the helical gear 42, while a lower portion of the first gear portion 511 engages with the first inner teeth portion 423 of the helical gear 42 so as not to rotate relative to each other, and therefore, the pinion gear 51 and the helical gear 42 rotate integrally with each other. An outer circumferential surface of the upper shaft portion 512 is axially rotatably supported by the first cover bearing hole 67 of the housing cover 65.

On the other hand, the spur gear 52, which is a driven portion of the second deceleration portion 5, includes a second gear portion 521, a second shaft hole 522, a second inner teeth portion 523 and connecting holes 524. The second gear portion 521 includes a spur gear formed along an outer circumferential surface of a thin cylindrical portion of the spur gear 52. The second shaft hole 522 is formed at a center of the cylindrical portion. The second inner teeth portion 523 is formed at an inner circumferential surface of the second shaft hole 522. The connecting holes 524 are formed at four portions on a circumference centering the third axis C3. The second gear portion 521 of the spur gear 52 engages with an upper portion of the first gear portion 511 of the pinion gear 51. A deceleration ratio between the spur gear 52 and the pinion gear 51 is set to be the reciprocal of a ratio of teeth numbers therebetween.

The elastic gear 53 is made of resin material and is formed into a substantially annular shape. The elastic gear 53 includes elasticity and lower rigidity than the spur gear 52. The elastic gear 53 includes a third gear portion 531, a third shaft hole 532 and connection protruding portions 533. The third gear portion 531 includes a spur gear formed at an outer circumferential surface of the elastic gear 53. The third shaft hole 532 is formed at a central portion of the elastic gear 53. The connection protruding portions 533, protruding toward the spur gear 52 in an axial direction of the elastic gear 53, are formed at plural portions on the circumference centering the third axis C. The number of teeth formed at the third gear portion 531 of the elastic gear 53 is the same as that of the second gear portion 521 of the spur gear 52 while a tooth thickness of the third gear portion 531 of the elastic gear 53 is larger than that of the second gear portion 521 of the spur gear 52 by an amount slightly larger than a backlash (or by an amount corresponding to a backlash) at an engagement between the pinion gear 51 and the spur gear 52. The connection protruding portions 533 of the elastic gear 53 engage with the corresponding connecting holes 524 of the spur gear 52. Therefore, the spur gear 52 and the elastic gear 53 are coaxially connected to each other so as to engage with the pinion gear 51 in the same phase in an interlocking manner.

An output gear member 57 outputs the driving force, which is decelerated by the first and second deceleration portions 4 and 5. The output gear member 57 axially rotatably supports the spur gear 52 and the elastic gear 53 around the third axis C3. As illustrated in Fig. 4, the output gear member 57 coaxially integrally includes a second lower shaft portion 571 (a shaft portion), an outer teeth portion 572, a flange portion 573, a second upper shaft portion 574 and the output gear 282. The second lower shaft portion 571 is inserted through the third shaft hole 532 of the elastic gear 53 and axially rotatably supported by the second main-body bearing hole 63 of the housing main body 61. The outer teeth portion 572 serration-engages with the second inner teeth portion 523 of the spur gear 52 so as not to rotate relative to each other. The flange portion 573 is arranged between an upper surface of the spur gear 52 in Fig. 4 and an inner wall surface of the housing cover 65. The second upper shaft portion 574 is axially rotatably supported by the second cover bearing hole 68. The output gear 282 protrudes toward an outside of the housing cover 65. In other words, the output gear member 57 is axially rotatably supported by the second main-body bearing hole 63 and the second cover bearing hole 68, which are respectively formed at lower and upper portions of the housing 6. The output gear member 57 is driven to rotate integrally with the spur gear 52, which serration-engages with the output gear 57. Consequently the output gear member 57 outputs the driving force to the output gear 282.

Operations of the power seat driving apparatus 1, specifically operations of the decelerating portion 3 according to the first embodiment will be described hereinafter. When the motor 281 is actuated in order to transmit the driving force thereof, having a rotational speed, to the worm 41 of the first deceleration portion 4, the helical gear 42 is driven to rotate while decelerating the rotational speed, and thus a first deceleration is executed. Subsequently, when the decelerated rotation is transmitted to the pinion gear 51 of the second deceleration portion 5, which rotates integrally with the helical gear 42, the spur gear 52 and the elastic gear 53 are driven to rotate while further decelerating the rotational speed, and thus a second deceleration is executed. The driving force, which is converted into a low speed high torque by the first and second deceleration, is outputted from the output gear 282 so as to pivot the sector gear 244 shown in Fig. 1, and thereby the moving unit of the seat, such as the side brackets 21 and the cushion frame 22, move upwardly and downwardly.

In the second deceleration portion 5, the tooth thickness of the elastic gear 53 is larger than that of the spur gear 52 by the amount corresponding to the backlash. Therefore, the spur gear 52 and the pinion gear 51 engage with each other so as to include the backlash therebetween while the elastic gear 53 and the pinion gear 51 engage with each other so as not to include a backlash therebetween. Accordingly, when the rotational speed outputted from the motor 281 is decelerated and the rotational speed of the pinion gear 51 is decelerated, an idling rotation of the elastic gear 53, caused by inertia, for the amount corresponding to the backlash, is less likely to occur. Even though the elastic gear 53 may idly rotate, stress and impact sounds, which may occur when the spur gear 52 idly rotates and when a teeth surface of the spur gear 52 clashes with a teeth surface of the pinion gear 51, are extremely small. In other words, even when inertia may lead the spur gear 52 to rotate idly for the amount corresponding to the backlash, actually the backlash may not occur because the elastic gear 53, which is interlocked with the spur gear 52, restricts the idling rotation of the spur gear 52. Further, the elastic gear 53 is made of a resin material, which includes elasticity and a low rigidity. Therefore, the elastic gear 53 includes a large resistance relative to an instantaneous large deformation, so that the idling rotation of the spur gear 52 is restricted. On the other hand, the elastic gear 53 is elastically deformed relative to a normal transmission of rotation from the pinion gear 51 to the spur gear 52, so that the spur gear 52 is driven to rotate smoothly.

As described above, the power seat driving apparatus 1 according to the first embodiment includes the elastic gear 53, which is coaxially interlocked with the spur gear 52, and whose tooth thickness is larger than the tooth thickness of the spur gear 52 by the amount corresponding to the backlash. Therefore, the backlash is restricted. Accordingly, operational stability of the decelerating portion 3 is improved. Further, damage, such as clash corresponding to the backlash, is reduced. Therefore, the housing main body 61 and the housing cover 65 may be made of resin. Accordingly, a weight and a cost are reduced. Furthermore, gear noise, which may occur in accordance with the backlash, is reduced.

### [Second embodiment]

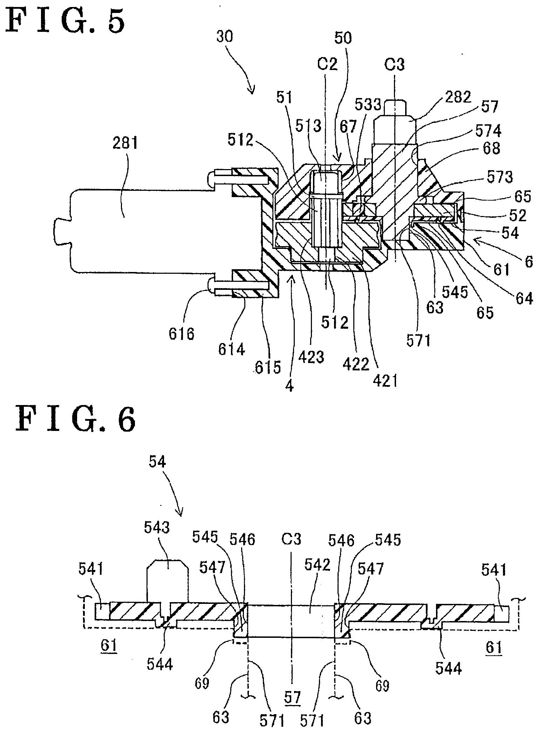

A second embodiment of the power seat driving apparatus 1 will be described hereinafter with reference to Figs. 5 and 6. According to the second embodiment, a backlash of a second deceleration portion 50 (a deceleration mechanism) in an axial direction thereof and in a radial direction thereof is reduced. An elastic gear 54 of the second deceleration portion 50, which is different from the first embodiment, will be described mainly hereinafter. In Fig. 6, the output gear member 57 and the housing 61 are illustrated by dashed line.

The elastic gear 54 according to the second embodiment is made of resin material and is formed into a substantially annular shape. The elastic gear 53 includes elasticity and lower rigidity than the spur gear 52. The elastic gear 54 includes a third gear portion 541, a third shaft hole 542 and connection protruding portions 543. The third gear portion 531 includes a spur gear formed at an outer circumferential surface thereof. The third shaft hole 542 is formed at a central portion of the elastic gear 54. The connection protruding portions 543, protruding toward the spur gear 52 in an axial direction of the elastic gear 54, are formed at plural portions on the circumference centering the third axis C. The number of teeth formed at the third gear portion 541 of the elastic gear 54 is the same as that of the second gear portion 521 of the spur gear 52 while a tooth thickness of the third gear portion 541 of the elastic gear 54 is larger than that of the second gear portion 521 of the spur gear 52 by the amount corresponding to the backlash. The connection protruding portions 543 of the elastic gear 54 engage with the corresponding connecting holes 524 of the spur gear 52. Therefore, the spur gear 52 and the elastic gear 54 are coaxially connected to each other so as to engage with the pinion gear 51 in the same phase in an interlocking manner.

Further, protruding portions 544, which slidably contact an inner wall surface 64 of the housing main body 61, are formed at a surface of the elastic gear 54 opposite from a surface thereof facing the spur gear 52. In other words, as illustrated in Fig. 6, an appropriate number of the protruding portions 544 are formed on a concentric circle so as to protrude downwardly in Fig. 6 from a lower surface of the elastic gear 54 in Fig. 6, being opposite from the surface where the connection protruding portions 543 are formed. Inner rim of the elastic gear 54, where the third shaft hole 542 is formed, is bent downwardly in Fig. 6 so as to form a cylindrical shape, and thereby forming a supplemental shaft portion 545. The supplemental shaft portion 545 is arranged between the second lower shaft portion 571 of the output gear member 57 and a supplemental bearing hole 69, which is formed at an upper rim of the second main-body bearing hole 63 so as to include a larger diameter than that of the second main-body bearing hole 63. The second lower shaft portion 571 of the output gear member 57 is fitted into an inner circumferential surface 546 of the supplemental shaft portion 545 while an outer circumferential surface 547 of the supplemental shaft portion 545 slidably contacts the supplemental bearing hole 69 of the housing main body 61.

In a decelerating portion 30 according to the second embodiment, when the spur gear 52 and the elastic gear 54 of the second deceleration portion 50 are driven to rotate in an interlocking manner, the protruding portions 544 of the elastic gear 54 slidably contact the inner wall surface 64 of the housing main body 61 from an axial direction of the elastic gear 54 while the second lower shaft portion 571 of the output gear member 57 is fitted into the inner circumferential surface 547 of the supplemental shaft portion 545 of the elastic gear 54, and outer circumferential surface 547 of the supplemental shaft portion 545 slidably contacts the supplemental bearing hole 69 of the housing main body 61. Accordingly, a backlash between the elastic gear 54 and the housing main body 61 in axial and radial directions of the elastic gear 54 is reduced. As a result, a backlash between the spur gear 52 and the housing 6 is reduced.

As described above, the decelerating portion 3 according to the first embodiment is modified in the second embodiment. According to the second embodiment, the protruding portions 544 and the supplemental shaft portion 545 are formed at the elastic gear 54 in order to reduce the backlash between the second deceleration portion 50 and the housing 6 in the axial and radial directions. Therefore, displacement of each of the spur gear 52 and the elastic gear 54 relative to the housing 6 in axial and radial directions is restricted. Accordingly, stability of operation of the decelerating portion 30 is improved.

### [Third embodiment]

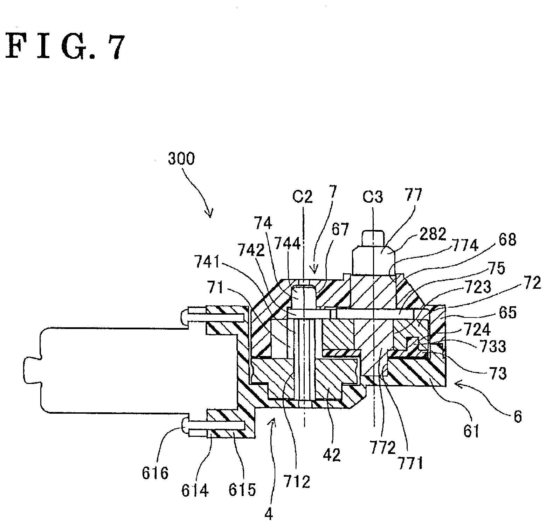

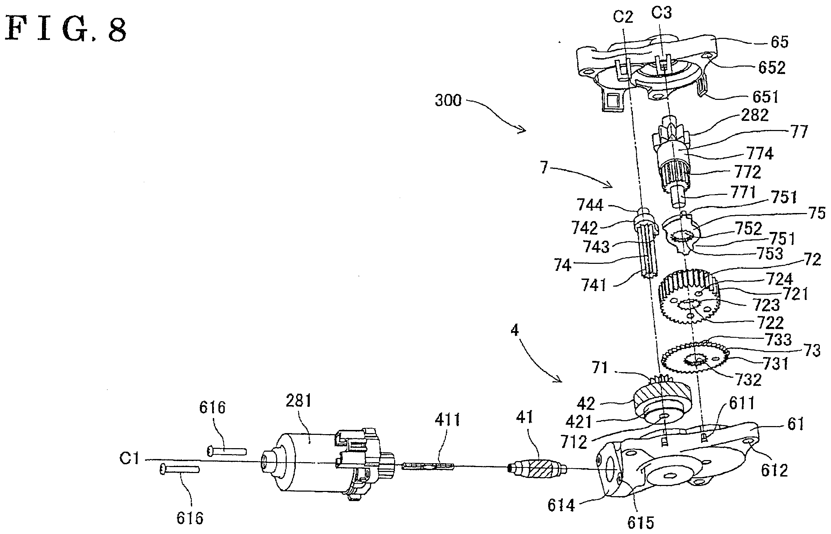

A third embodiment of the power seat driving apparatus 1 will be described hereinafter with reference to Figs. 7 and 8. According to the third embodiment, a rotational range of the output gear 282 is restricted. Only portions different from the first embodiment will be described mainly hereinafter. Configurations of the housing 6 of a decelerating portion 300 according to the third embodiment and the first deceleration portion 4 are similar to that of the first embodiment.

A second deceleration portion 7 (a deceleration mechanism) according to the third embodiment includes a pinion gear (a driving gear) 71, a spur gear (a driven gear) 72, and an elastic gear (a supplemental gear) 73. The second deceleration portion 7 further includes a stopper pin 74 and a stopper plate 75. The pinion gear 71, which is a driving portion of the second declaration portion 7, is coaxially integrally formed at an upper end of the helical gear 42 of the first deceleration portion 4. The pinion gear 71 and the helical gear 42 include a shaft hole at a central portion thereof. A first inner teeth portion 712 is formed at an inner circumferential surface of the shaft hole.

The stopper pin 74 includes a first outer teeth portion 741, a stopper cam 742 and a first upper shaft portion 744. The first outer teeth portion 741 includes outer teeth formed along an outer circumferential surface of a cylindrical portion of the stopper pin 74. The stopper cam 742 is integrally formed at an upper end of the first outer teeth portion 741 in Figs 7 and 8. The first upper shaft portion 744 is coaxially integrally formed at an upper end of the stopper cam 742, so as to include a smaller radius than the stopper cam 742. The stopper cam 742 is a noncircular-shaped cam member including an engagement protruding portion 743 at an outer rim thereof. The first outer teeth portion 741 of the stopper pin 74 serration-engages with the first inner teeth portion 712 of the shaft hole of the pinion gear 71 and the helical gear 42 so as not to be rotatable relative to each other. An outer circumferential surface of the first upper shaft portion 744 of the stopper pin 74 is axially rotatably supported by the first cover bearing hole 67 of the housing cover 65.

On the other hand, the spur gear 72, which is a driven portion of the second deceleration portion 7, includes a first gear portion 721, a first shaft hole 722, a second inner teeth portion 723 and connecting holes 724. The first gear portion 721 includes a spur gear formed along an outer circumferential surface of a cylindrical portion of the spur gear 72. The first shaft hole 722 is formed at a center of the spur gear 72. The second inner teeth portion 723 is formed at an inner circumferential surface of the first shaft hole 722. The connecting holes 724 are formed at four portions on a circumference centering the third axis C3. The first gear portion 721 of the spur gear 72 engages with the pinion gear 71. A deceleration ratio between the spur gear 72 and the pinion gear 71 is set to be the reciprocal of a ratio of teeth numbers therebetween.

The elastic gear 73 is made of resin material and is formed into a substantially annular shape. The elastic gear 73 includes elasticity and lower rigidity than the spur gear 72. The elastic gear 53 includes a second gear portion 731, a second shaft hole 732 and connection protruding portions 733. The second gear portion 731 includes a spur gear formed at an outer circumferential surface of the elastic gear 73. The second shaft hole 732 is formed at a central portion of the elastic gear 73. The connection protruding portions 733, protruding toward the spur gear 72 in an axial direction of the elastic gear 73, are formed at plural portions on the circumference centering the third axis C. The number of teeth formed at the second gear portion 731 of the elastic gear 73 is the same as that of the first gear portion 721 of the spur gear 72 while a tooth thickness of the second gear portion 731 of the elastic gear 73 is larger than that of the first gear portion 721 of the spur gear 72 by the amount corresponding to the backlash. The connection protruding portions 733 of the elastic gear 73 engage with the corresponding connecting holes 724 of the spur gear 72. Therefore, the spur gear 72 and the elastic gear 73 are coaxially connected to each other so as to engage with the pinion gear 71 in the same phase in an interlocking manner.

The stopper plate 75 includes a plurality of engagement portions 751, a third shaft hole 752 and a third inner teeth portion 753. The plurality of engagement portions 751 is formed at an outer rim of the plate-shaped stopper plate 75. The third shaft hole 752 is formed at a central portion of the stopper plate 75. The third inner teeth portion 753 is formed at an inner circumferential surface of the third shaft hole 752. The stopper plate 75 is arranged at the same height as the stopper cam 742 of the stopper pin 74 so as to face the stopper cam 742.

An output gear member 77 outputs the driving force, which is decelerated by the first and second deceleration portions 4 and 7. The output gear member 77 axially rotatably supports the spur gear 72, the elastic gear 73 and the stopper plate 75 around the third axis C3. As illustrated in Figs. 7 and 8, the output gear member 77 coaxially integrally includes a first lower shaft portion 771, a second outer teeth portion 772, a second upper shaft portion 774 and the output gear 282. The first lower shaft portion 771 is inserted through the second shaft hole 732 of the elastic gear 73 and axially rotatably supported by the second main-body bearing hole 63 of the housing main body 61. The second outer teeth portion 772 serration-engages with the third inner teeth portion 753 of the stopper plate 75 and with the second inner teeth portion 723 of the spur gear 72 so as not to rotate relative to each other. The second upper shaft portion 774 is axially rotatably supported by the second cover bearing hole 68. The output gear 282 protrudes toward the outside of the housing cover 65. In other words, the output gear member 77 is axially rotatably supported by the second main-body bearing hole 63 and the second cover bearing hole 68, which are respectively formed at the lower and upper portions of the housing 6. The output gear member 77 is driven to rotate integrally with the spur gear 72, which serration-engages with the output gear member 77. Consequently the output gear member 77 outputs the driving force to the output gear 282.

Operations of the decelerating portion 300 according to the third embodiment will be described hereinafter. When the driving force, whose rotational speed is decelerated by the first deceleration portion 4, is transmitted to the pinion gear 71 of the second deceleration portion 7 via the helical gear 42, the spur gear 72 and the elastic gear 73 are driven to rotate while further decelerating the rotational speed. When the spur gear 72 and the elastic gear 73 rotate, as in the first embodiment, the backlash may not occur because of the operation of the elastic gear 73.

Further, according to the third embodiment, when the pinion gear 71 and the stopper pin 74 integrally rotate, the stopper plate 75 and the spur gear 72 integrally rotate. When the stopper pin 74 rotates for a predetermined number of times, the engagement protruding portion 743 of the stopper cam 742 contacts and engages with a first engagement portion 751 of the stopper plate 75 so as to restrict a rotation of the stopper plate 75. Further, when the stopper pin 74 rotates for a predetermined number of times in an opposite direction, the engagement protruding portion 743 of the stopper cam 742 contacts and engages with a second engagement portion 751 of the stopper plate 75 so as to restrict a rotation of the stopper plate 75. Thus, a rotation angle range of the stopper plate 75 is restricted, and consequently, a rotation angle range of the output gear 282 is restricted. The rotation angle range may be set freely in a manner where shapes of the stopper cam 742 and the stopper plate 75 are modified.

As described above, according to the third embodiment, the first embodiment is modified so that the stopper pin 74 and the stopper plate 75 are provided in order to restrict the rotation angle range of the output gear 282. Therefore, upward and downward movement range of the moving unit 21 to 27 of the seat is appropriately restricted, and a necessity of arranging a restricting means after the output gear 282 is reduced.

According to the first to third embodiments, a seat tilt apparatus, in which the front portion of the cushion frame 22 pivots in order to move a front portion of the seat cushion upwardly and downwardly, serves as a power seat driving apparatus. However, not limited to the first to third embodiments, a seat slide apparatus for moving a seat cushion in a front-rear direction of a vehicle, or a seat lifter apparatus for moving an entire seat cushion upwardly and downwardly, may be applied, for example. In other words, a power seat driving apparatus, in which a driving force of a power supply is decelerated and transmitted so as to move a moving unit, may be applied.

Further, the power seat driving apparatus 1 according to the first to third embodiments may be applied to an apparatus having a motor and a decelerating mechanism, such as a power window apparatus for a vehicle, and the like, so as to reduce size and weight and so as to improve credibility.

## Claims

1. A power seat driving apparatus for a vehicle comprising:
a moving unit (21, 22, 23, 24, 25, 26, 27) adapted to be arranged between a seat and a vehicle floor so as to move the seat relative to the vehicle floor; and
a decelerating mechanism (3, 30, 300) connected to the moving unit so as to decelerate a driving force outputted by a power supply (281) and transmit the decelerated driving force to the moving unit (21, 22, 23, 24, 25, 26, 27); wherein
the decelerating mechanism (3, 30, 300) includes:
a driving gear (51, 71);
a driven gear (52, 72) engaging with the driving gear (51, 71) and driven to rotate while decelerating a rotational speed of the driving gear (51, 71);
a supplemental gear (53, 54, 73) coaxially connected to the driven gear (52, 72) in an interlocking manner, made of a resin material having elasticity and lower rigidity than the driven gear (52, 72), having a larger tooth thickness than a tooth thickness of the driven gear (52, 72) by an amount corresponding to a backlash, and engaging the driving gear (51, 71) together with the driven gear (52, 72); and
a housing (6) accommodating and rotatably supporting the driving gear (51, 71), the driven gear (52, 72) and the supplemental gear (53, 54, 73).

2. The power seat driving apparatus according to Claim 1, wherein
the driven gear (52, 72) and the supplemental gear (53, 54, 73) are a spur gear having the same number of teeth and the same phase.

3. The power seat driving apparatus according to either Claim 1 or Claim 2, wherein
a protruding portion (544) slidably contacting an inner wall surface (64) of the housing (6) is formed on a surface of the supplemental gear (54) opposite from a surface thereof facing the driven gear (52).

4. The power seat driving apparatus according to any one of Claims 1 to 3, wherein
the driven gear (52) integrally or separately includes a shaft portion (571) extending in an axial direction of the driven gear (52) and rotatably supported by a recess (63) formed at an inner circumferential surface of the housing (6), at an outer circumferential surface thereof, and wherein
the supplemental gear (54) includes a supplemental shaft portion (545) arranged between the shaft portion (571) of the driven gear (52) and a supplemental bearing hole (69) formed at the housing (6) coaxially with the recess (63), the supplemental shaft portion (545) fitted with the shaft portion (571) while slidably contacting the supplemental bearing hole (69).

## Patentansprüche

1. Antriebsvorrichtung für einen angetriebenen Sitz für ein Fahrzeug, umfassend:
eine Bewegungseinheit (21, 22, 23, 24, 25, 26, 27), die dafür ausgelegt ist, zwischen einem Sitz und einem Fahrzeugboden angeordnet zu werden, um den Sitz relativ zu dem Fahrzeugboden zu bewegen, und
einen Verlangsamungsmechanismus (3, 30, 300), der mit der Bewegungseinheit verbunden ist, um eine durch eine Kraftversorgung (281) ausgegebene Antriebskraft zu verlangsamen und die verlangsamte Antriebskraft zu der Bewegungseinheit (21, 22, 23, 24, 25, 26, 27) zu übertragen, wobei
der Verlangsamungsmechanismus (3, 30, 300) enthält:
ein antreibendes Zahnrad (51, 71),
ein angetriebenes Zahnrad (52, 72), welches das antreibende Zahnrad (51, 71) in Eingriff nimmt und in Drehung versetzt wird, während eine Drehzahl des antreibenden Zahnrades (51, 71) verlangsamt wird,
ein Zusatzzahnrad (53, 54, 73), das koaxial mit dem angetriebenen Zahnrad (52, 72) in einer sperrenden Weise verbunden ist, aus einem Harzmaterial besteht, das Elastizität besitzt und eine geringere Steifigkeit aufweist als das angetriebene Zahnrad (52, 72), eine Zahndicke hat, die um einen Betrag, der einem Flankenspiel entspricht, größer ist als eine Zahndicke des angetriebenen Zahnrades (52, 72), und das antreibende Zahnrad (51, 71) zusammen mit dem angetriebenen Zahnrad (52, 72) in Eingriff nimmt, und
ein Gehäuse (6), das das antreibende Zahnrad (51, 71), das angetriebene Zahnrad (52, 72) und das Zusatzzahnrad (53, 54, 73) aufnimmt und drehbar stützt.

2. Antriebsvorrichtung für einen elektrischen Sitz nach Anspruch 1, wobei
das angetriebene Zahnrad (52, 72) und das Zusatzzahnrad (53, 54, 73) ein Geradstirnrad sind, das die gleiche Anzahl von Zähnen und die gleiche Phase aufweist.

3. Antriebsvorrichtung für einen elektrischen Sitz nach Anspruch 1 oder Anspruch 2, wobei
ein vorspringender Abschnitt (544), der eine Innenwandfläche (64) des Gehäuses (6) gleitfähig kontaktiert, auf einer Oberfläche des Zusatzzahnrades (54) ausgebildet ist, die einer Fläche gegenüberliegt, die dem angetriebenen Zahnrad (52) zugewandt ist.

4. Antriebsvorrichtung für einen elektrischen Sitz nach einem der Ansprüche 1 bis 3, wobei
das angetriebene Zahnrad (52) integral oder separat einen Wellenabschnitt (571) enthält, der sich in einer axialen Richtung des angetriebenen Zahnrades (52) erstreckt und durch eine Ausnehmung (63), die in einer Innenumfangsfläche des Gehäuses (6) ausgebildet ist, drehbar an einer Außenumfangsfläche gestützt wird, und
wobei das Zusatzzahnrad (54) einen Zusatzwellenabschnitt (545) enthält, der zwischen dem Wellenabschnitt (571) des angetriebenen Zahnrades (52) und einem Zusatzlagerloch (69), das in dem Gehäuse (6) koaxial mit der Ausnehmung (63) ausgebildet ist, angeordnet ist, wobei der Zusatzwellenabschnitt (545) mit dem Wellenabschnitt (571) ausgebildet ist, während er das Zusatzlagerloch (69) gleitfähig kontaktiert.

## Revendications

1. Appareil d'entraînement de siège électrique pour un véhicule comportant :
une unité de déplacement (21, 22, 23, 24, 25, 26, 27) prévue pour être disposée entre un siège et un plancher de véhicule de façon à déplacer le siège par rapport au plancher de véhicule ; et
un mécanisme de décélération (3, 30, 300) relié à l'unité de déplacement de façon à ralentir une force d'entraînement délivrée par une alimentation (281) et transmettre la force d'entraînement ralentie à l'unité de déplacement (21, 22, 23, 24, 25, 26, 27) ; dans lequel
le mécanisme de décélération (3, 30, 300) comprend :
un pignon d'entraînement (51, 71) ;
un pignon entraîné (52, 72) qui engage le pignon d'entraînement (51, 71) et est entraîné en rotation tout en ralentissant une vitesse de rotation du pignon d'entraînement (51, 71) ;
un pignon supplémentaire (53, 54, 73) relié coaxialement au pignon entraîné (52, 72) d'une manière bloquée, fabriqué en résine ayant une élasticité et une rigidité inférieure au pignon entraîné (52, 72), ayant une épaisseur de dent plus grande qu'une épaisseur de dent du pignon entraîné (52, 72) d'une quantité correspondant à un jeu, et engageant le pignon d'entraînement (51, 71) avec le pignon entraîné (52, 72) ; et
un logement (6) recevant et supportant de façon rotative le pignon d'entraînement (51, 71), le pignon entraîné (52, 72) et le pignon supplémentaire (53, 54, 73).

2. Appareil d'entraînement de siège électrique selon la revendication 1, dans lequel
le pignon entraîné (52, 72) et le pignon supplémentaire (53, 54, 73) sont un pignon droit ayant le même nombre de dents et la même phase.

3. Appareil d'entraînement de siège électrique selon la revendication 1 ou la revendication 2, dans lequel
une partie saillante (544) entrant en contact de façon coulissante avec une surface de paroi intérieure (64) du logement (6) est formée sur une surface du pignon supplémentaire (54) opposée à une surface de celui-ci faisant face au pignon entraîné (52).

4. Appareil d'entraînement de siège électrique selon l'une quelconque des revendications 1 à 3, dans lequel
le pignon entraîné (52) d'un seul tenant ou d'une manière séparée, comprend une partie d'arbre (571) s'étendant dans une direction axiale du pignon entraîné (52) et supportée de façon rotative par un renfoncement (63) formé sur une surface circonférentielle interne du logement (6), sur une surface circonférentielle externe de celui-ci, et dans lequel
le pignon supplémentaire (54) comprend une partie d'arbre supplémentaire (545) disposée entre la partie d'arbre (571) du pignon entraîné (52) et un trou de palier supplémentaire (69) formé au niveau du logement (6) coaxialement au renfoncement (63), la partie d'arbre supplémentaire (545) étant montée avec la partie d'arbre (571) tout en étant en contact de façon coulissante avec le trou de palier supplémentaire (69).
